# EUROPÄISCHE PATENTANMELDUNG

(11) **EP 4 796 833 A1**
(43) Veröffentlichungstag der Anmeldung: **26.08.2026**
(21) Anmeldenummer: 26160300.5
(22) Anmeldetag: 24.02.2026
(51) Int. Cl.: F21S 8/08, F21V 21/00, F21V 33/00, F21W 131/10

(54) **STATIVHALTERUNG**

(30) Priorität: 24.02.2025 DE 202025100978 U
(71) Anmelder: SETOLITE Lichttechnik GmbH, 42499 Hückeswagen (DE)
(72) Erfinder: Schultz, Peter, 42929 Wermelskirchen (DE)
(74) Vertreter: dompatent

(57) **Zusammenfassung**

Stativhalterung zur Aufstellung auf einem Container mit einem Basiselement mit einer ersten Seite und einer zweiten Seite, einem Aufnahmeelement zur Aufnahme eines Stativs, wobei das Aufnahmeelement mit der ersten Seite des Basiselements verbunden ist, und einem Twistlockverschluss, wobei der Twistlockverschluss mit der zweiten Seite des Basiselements verbunden ist.

## Beschreibung

Die vorliegende Erfindung betrifft eine Stativhalterung zur Aufstellung auf einem Container sowie eine Leuchte mit einer solchen Stativhalterung.

Bei der provisorischen Errichtung von Gebäuden werden häufig Container verwendet. Hierbei handelt es sich insbesondere um Überseecontainer bzw. ISO-Container, welche beispielsweise nach dem Standard ISO 668 spezifiziert sind. Diese Container bieten eine weite Verfügbarkeit, eine weite Verfügbarkeit von Transportmitteln für solche Transportmittel und lassen sich somit schnell errichten. Zur Errichtung einer funktionierenden Infrastruktur ist es jedoch nicht ausreichend, lediglich solche Container bereitzustellen. Häufig ist es ebenfalls erforderlich beispielsweise eine Beleuchtung zu errichten zur Ausleuchtung der provisorischen Infrastruktur. Hierzu bietet es sich an, Leuchten mit Leuchtelementen bzw. Lampen auf einem Stativ vorzusehen, um die Leuchtelemente möglichst hoch anzubringen und hierbei eine möglichst große Fläche ausleuchten zu können. Hierzu kann das Stativ beispielswiese ein Dreibein aufweisen zur Errichtung auf dem Boden. Solche Stative sind jedoch schwer und nehmen auch im zusammengeschobenen Zustand wertvolle Beförderungskapazität ein. Weiterhin besteht bei solchen Stativen stets die Gefahr, dass diese beispielsweise durch Wind oder anderweitige Einwirkungen umstürzen können.

Aufgabe der vorliegenden Erfindung ist es eine Stativhalterung zu schaffen, welche kompakt ausgebildet ist und sicher aufgestellt werden kann.

Die Aufgabe wird gelöst durch eine Stativhalterung gemäß Anspruch 1 sowie eine Leuchte gemäß Anspruch 9.

Die erfindungsgemäße Stativhalterung zur Aufstellung auf einem Container weist ein Basiselement auf mit einer ersten Seite und einer zweiten Seite. Ein Aufnahmeelement zur Aufnahme eines Stativs ist dabei mit der ersten Seite des Basiselements verbunden. In das Aufnahmeelement kann beispielsweise ein Stativ eingesteckt oder sonstwie verbunden werden, wobei mit dem Stativ eine Einrichtung verbunden werden kann, welche insbesondere hoch angebracht werden soll. Bei dieser Einrichtung kann es sich beispielsweise um eine Lampe, einen Lautsprecher, eine Antenne oder dergleichen handeln. Die vorliegende Erfindung ist nicht auf die konkrete Einrichtung beschränkt, welche mit dem Stativ sicher gehalten werden soll. Weiterhin ist die vorliegende Erfindung auch nicht beschränkt auf die konkrete Ausgestaltung des Aufnahmeelements, so dass das Stativ beispielsweise durch Einstecken mit dem Aufnahmeelement verbunden werden kann oder dergleichen. Alternativ kann das Stativ einstückig mit dem Aufnahmeelement ausgebildet sein.

Erfindungsgemäß ist mit der zweiten Seite des Basiselements ein Twistlockverschluss verbunden. Insbesondere handelt es sich bei Twistlockverschlüssen um bekannte Verschlüsse zur Verbindung von Containern. Vorzugsweise weist der Twistlockverschluss einen drehbaren Zapfen auf, wobei der Zapfen ein längliches Verriegelungselement aufweist. Bei der Verbindung mit einem Eckbeschlag eines Containers, wird dabei der Zapfen zusammen mit dem Verriegelungselement in eine Öffnung des Containereckbeschlags eingeführt und sodann durch Drehen in dem Containereckbeschlag verriegelt. Hierdurch wird eine feste und sichere Verbindung des Twistlockverschlusses mit dem Container gewährleistet. Ein Twistlockverschluss wird beispielsweise verwendet, um Container auf Containerschiffen, LKW-Ladeflächen oder dergleichen zu sichern. Insbesondere ist hierbei der Twistlockverschluss ausgebildet zur Aufnahme in einem Containereckbeschlag nach ISO 1061:2016. Somit kann erfindungsgemäß die Stativhalterung auf einem Container sicher angebracht werden. Ein unbeabsichtigtes Umfallen der Stativhalterung und des damit verbundenen Stativs wird hierbei gerade verhindert. Gleichzeitig wird die Höhe des Containers bereits ausgenutzt, sodass ein Stativ deutlich kürzer ausgebildet sein kann im Vergleich zu Stativen, welche unmittelbar auf dem Boden aufgestellt werden. Insbesondere weisen Standardcontainer eine Höhe von 2,59 m auf (bzw. in manchen Ausführungsformen sogar 2,90 m). Dementsprechend kürzer kann das Stativ, welches mit der Stativhalterung verbunden ist, ausfallen, ohne eine geringere Höhe der mit dem Stativ verbundenen Einrichtung zu gewährleisten. Hierdurch wird Gewicht und Stauraum/Beförderungskapazität für den Transport von Stativhalterung und Stativ.

Vorzugsweise ist die erste Seite des Basiselements gegenüberliegend der zweiten Seite angeordnet. Somit sind ebenfalls Twistlockverschluss und Aufnahmeelement gegenüberliegend angeordnet, sodass die Stativhalterung unmittelbar auf dem Container angebracht werden kann und sich das Stativ unmittelbar von der Oberfläche des Containers erstreckt.

Alternativ hierzu ist die erste Seite des Basiselements im Wesentlichen rechtwinklig zu der zweiten Seite angeordnet. Somit kann eine seitliche Öffnung des Containereckbeschlags verwendet werden. Insbesondere, sofern mehrere Container aufeinandergestapelt werden, kann auch ein Containereckbeschlag eines unteren Containers verwendet werden zur Aufnahme des Twistlockverschlusses und zur Verbindung mit dem Aufnahmeelement. Somit kann das Stativ seitlich neben dem Container angebracht werden.

Vorzugsweise weist das Aufnahmeelement ein Fixierelement auf zum lösbaren Verbinden des Stativs mit der Stativhalterung. Hierbei kann es sich beispielsweise um eine Rastverbindung, eine Schraub-Klemm-Verbindung oder dergleichen handeln. Alternativ hierzu ist das Stativ fest und dauerhaft mit dem Aufnahmeelement verbunden und somit Teil der Stativhalterung.

Vorzugsweise ist das Aufnahmeelement und/oder der Twistlockverschluss mit dem Basiselement verschweißt. Hierdurch kann eine einfache Herstellung gewährleistet werden, welche haltbar ist und auch großen Hebelkräften eines langen Stativs widersteht.

In einem weiteren Aspekt der vorliegenden Erfindung ist eine Leuchte bereitgestellt mit einem Leuchtelement/Lampe und einem Stativ, wobei das Leuchtelement mit einem ersten Ende des Stativs verbunden ist und eine Stativhalterung, wie vorstehend beschrieben, mit dem gegenüberliegenden zweiten Ende des Stativs verbunden ist. Somit kann über die Stativhalterung und insbesondere des Twistlockverschluss der Stativhalterung die Leuchte unmittelbar auf oder an einem Container befestigt werden. Hierdurch wird eine sichere Befestigung gewährleistet und gleichzeitig die bereits vorhandene Höhe des Containers ausgenutzt, um die Leuchtelemente der Leuchte in großer Höhe anzubringen.

Nachfolgend wird die Erfindung anhand bevorzugter Ausführungsformen unter Bezugnahme auf die beigefügten Figuren näher erläutert.

Es zeigen:

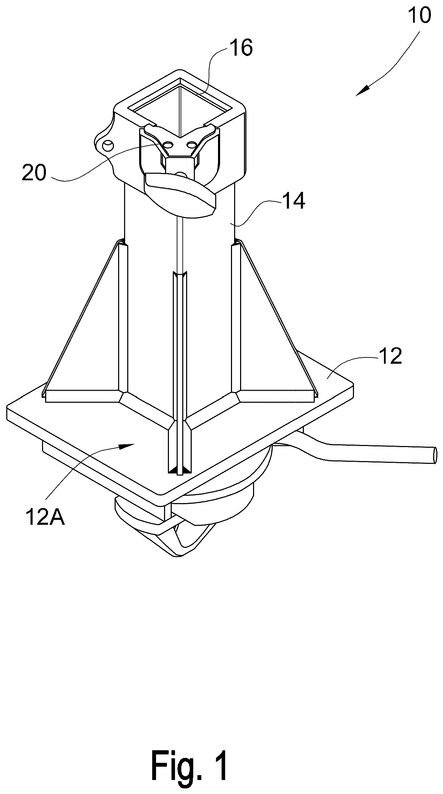

- Fig. 1: eine Stativhalterung gemäß der vorliegenden Erfindung in perspektivischer Ansicht,

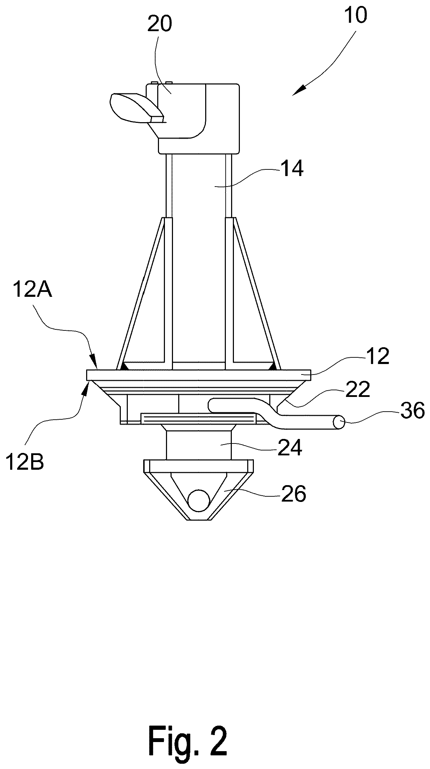

- Fig. 2: die Stativhalterung gemäß Fig. 1 in Seitenansicht und
- Fig. 3: eine exemplarische Anwendung der Stativhalterung.

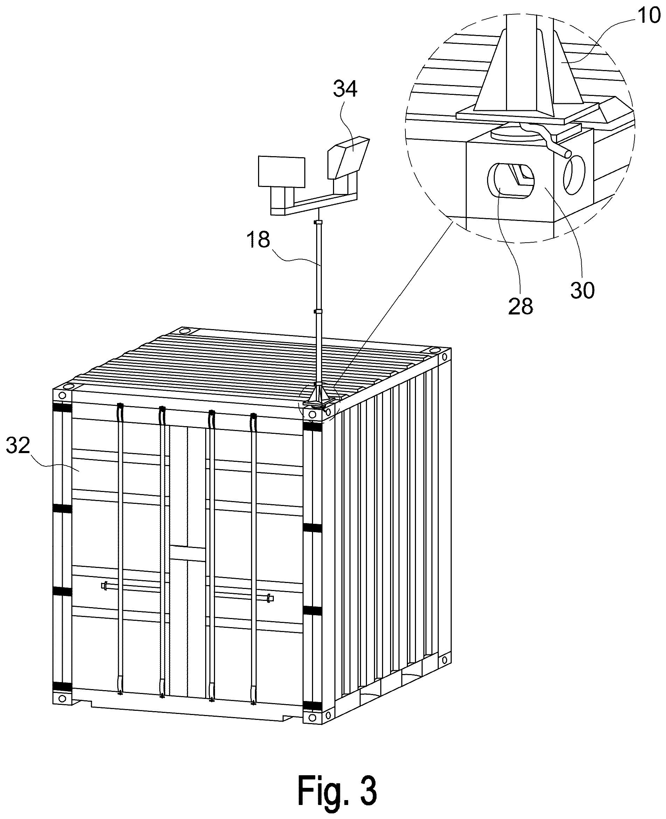

Die erfindungsgemäße Stativhalterung 10 weist ein Basiselement 12 auf. In dem Beispiel der Figuren ist dabei das Basiselement 12 plattenförmig ausgebildet. Das Basiselement 12 weist eine Oberseite 12A und eine Unterseite 12B auf. Mit der Oberseite 12A ist ein Aufnahmeelement 14 verbunden zur Aufnahme eines Stativs. Hierzu weist das Aufnahmeelement 14 eine Ausnehmung 16 auf, in die ein Stativ eingesteckt werden kann. Insbesondere kann das Stativ 18 (Fig. 3) mit einem Klemmelement 20 in der Ausnehmung 16 fixiert werden. Die vorliegende Erfindung ist jedoch nicht hierauf beschränkt. Das Aufnahmeelement 14 ist dabei insbesondere durch Schweißen mit der Oberseite 12A des Basiselements 12 verbunden.

Mit der Unterseite 12B des Basiselements 12 ist ein Twistlockverschluss 22 verbunden. Der Twistlockverschluss 22 weist dabei einen drehbaren Zapfen 24 auf, wobei mit dem drehbaren Zapfen 24 ein längliches Verriegelungselement 26 verbunden ist. Der Twistlockverschluss 22 ist dabei ausgebildet zur Aufnahme in einem Containereckbeschlag nach ISO 1061:2016. Zur Aufnahme in einem Eckbeschlag 30 (s. Fig. 3) wird das Verriegelungselement 26 in eine Öffnung 28 des Eckbeschlags 30 eingeführt und sodann beispielsweise mittels eines Hebelelements 36 in der Öffnung 28 verdreht und hierdurch verriegelt. Hierbei liegt das Basiselement 12 oder ein Teil des Twistlockverschlusses 22 unmittelbar an dem Container 32 an und verhindert somit ein Umkippen des Stativs 18.

Im Folgenden wird Bezug genommen auf die Fig. 3. In der Fig. 3 ist eine Anwendung der Stativhalterung gemäß der vorliegenden Erfindung gezeigt. Hierbei wird auf einen Container 32 die Stativhalterung 10 in einem Containereckbeschlag 30 befestigt. Ein Stativ 18 ist in die Stativhalterung 10 eingeführt. Lampen 34 können sodann mit dem Stativ 18 verbunden sein, wodurch diese zusätzlich zu der Höhe des Stativs 18 gleichzeitig auch die Höhe des Containers 32 ausnutzen und somit auf einfache Weise sicher auf großer Höhe angebracht werden können. Auch wenn die Fig. 3 Lampen 34 darstellt, welche auf dem Stativ angebracht sind, so sind auch andere Einrichtungen ebenfalls denkbar, die auf dem Stativ 18 angebracht werden können. Hierbei kann es sich alternativ beispielsweise um eine Antenne, einen Lautsprecher oder dergleichen handeln, welche mit dem Stativ verbunden sind und somit auf ein Container 32 aufgestellt werden können.

## Patentansprüche

1. Stativhalterung zur Aufstellung auf einem Container mit
einem Basiselement mit einer ersten Seite und einer zweiten Seite,
einem Aufnahmeelement zur Aufnahme eines Stativs, wobei das Aufnahmeelement mit der ersten Seite des Basiselements verbunden ist, und
einem Twistlockverschluss, wobei der Twistlockverschluss mit der zweiten Seite des Basiselements verbunden ist.

2. Stativhalterung nach Anspruch 1, **dadurch gekennzeichnet, dass** die erste Seite des Basiselements gegenüberliegend zu der zweiten Seite angeordnet ist.

3. Stativhalterung nach Anspruch 1, **dadurch gekennzeichnet, dass** die erste Seite des Basiselements rechtwinklig zu der zweiten Seite angeordnet ist.

4. Stativhalterung nach einem der Ansprüche 1 bis 3, **dadurch gekennzeichnet, dass** das Basiselement auf der zweiten Seite eine Anlagefläche aufweist.

5. Stativhalterung nach einem der Ansprüche 1 bis 4, **dadurch gekennzeichnet, dass** das Aufnahmeelement ein Fixierelement aufweist zum lösbaren Verbinden des Stativs mit der Stativhalterung.

6. Stativhalterung nach einem der Ansprüche 1 bis 5, **dadurch gekennzeichnet, dass** das Aufnahmeelement und/oder der Twistlockverschluss mit dem Basiselement verschweißt sind.

7. Stativhalterung nach einem der Ansprüche 1 bis 6, **dadurch gekennzeichnet, dass** der Twistlockverschluss einen drehbaren Zapfen aufweist, wobei der Zapfen ein längliches Verriegelungselement aufweist.

8. Stativhalterung nach einem der Ansprüche 1 bis 7, **dadurch gekennzeichnet, dass** der Twistlockverschluss ausgebildet ist zur Aufnahme in einem Containereckbeschlag nach ISO 1161:2016.

9. Leuchte mit einem Leuchtelement und einem Stativ, wobei das Leuchtelement mit einem ersten Ende des Stativs verbunden ist und eine Stativhalterung nach einem der Ansprüche 1 bis 8 mit einem gegenüberliegenden zweiten Ende des Stativs verbunden ist.
